# EUROPEAN PATENT APPLICATION

(11) **EP 4 714 740 A1**
(43) Date of publication of application: **25.03.2026**
(21) Application number: 25192762.0
(22) Date of filing: 30.07.2025
(51) Int. Cl.: B60N 2/90

(54) **AIR BAG**

(30) Priority: 19.09.2024 JP 2024162434
(71) Applicant: AISIN CORPORATION, Aichi 448-8650 (JP)
(72) Inventor: KANBARA, Tomoko, Kariya, 448-8650 (JP); OGISO, Takashi, Kariya, 448-8650 (JP)
(74) Representative: TBK

(57) **Abstract**

An air bag (30) includes a bag portion (40, 41, 42) including two air chambers (51, 52) that expand by supply of air and contract by exhaust of air, a branch flow path (55) that connects the two air chambers (51, 52), and a connecting flow path (56) that is connected to the branch flow path (55), when a part in a longitudinal direction of the branch flow path (55) is defined as a flow path portion (55a), the connecting flow path (56) is connected to the flow path portion (55a), and the air bag (30) further includes a sandwiching portion (72, 73) that sandwiches a portion of the flow path portion (55a) of the branch flow path (55) except for a boundary portion (55d) to which the connecting flow path (56) is connected.

## Description

### TECHNICAL FIELD

The present disclosure relates to an air bag.

### BACKGROUND DISCUSSION

JP 2022-158601 A describes a seat device including a seat back and a pneumatic system. The pneumatic system includes an air bag incorporated in the seat back, a pump that pumps air, a flow path that connects the air bag and the pump, and a valve device provided in the flow path. The pneumatic system supplies air to the air bag to expand the air bag, or exhausts air from the air bag to contract the air bag. In this manner, the seat device massages the body of a user seated on the seat device.

In the seat device as described above, the air bag has two air chambers connected by a flow path portion. An air tube for supplying and exhausting air is connected to one of the two air chambers. In a case where air is supplied to the air bag, one air chamber is expanded by supplying air from the air tube, and the other air chamber is expanded by supplying air from the one air chamber. In such an air bag, it is preferable that the two air chambers expand quickly at the time of air supply.

A need thus exists for an air bag in which two air chambers expand quickly at the time of air supply.

### SUMMARY

An air bag for solving the above problem includes a bag portion including two air chambers that expand by supply of air and contract by exhaust of air, a branch flow path that connects the two air chambers, and a connecting flow path that is connected to the branch flow path, when a part in a longitudinal direction of the branch flow path is defined as a flow path portion, the connecting flow path is connected to the flow path portion, and the air bag further includes a sandwiching portion that sandwiches a portion of the flow path portion of the branch flow path except for a boundary portion to which the connecting flow path is connected.

The air bag can quickly expand the two air chambers at the time of air supply.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view of a seat including a pneumatic system;
Fig. 2 is an exploded perspective view of an air bag in the pneumatic system illustrated in Fig. 1;
Fig. 3 is a plan view of a bag portion of the air bag illustrated in Fig. 2;
Fig. 4 is a cross-sectional view of the air bag illustrated in Fig. 2, the cross-sectional view being orthogonal to the height direction of an ottoman;
Fig. 5 is an enlarged cross-sectional view of Fig. 4;
Fig. 6 is a cross-sectional view illustrating a state where the air bag illustrated in Fig. 2 is contracted;
Fig. 7 is a cross-sectional view illustrating a state where the air bag illustrated in Fig. 2 is expanded;
Fig. 8 is a plan view illustrating a support mode of an air bag according to a modification; and
Fig. 9 is a plan view illustrating the support mode of the air bag according to the modification.

### DETAILED DESCRIPTION

Hereinafter, an embodiment of a pneumatic system including an air bag will be described.

### <Configuration of Present Embodiment>

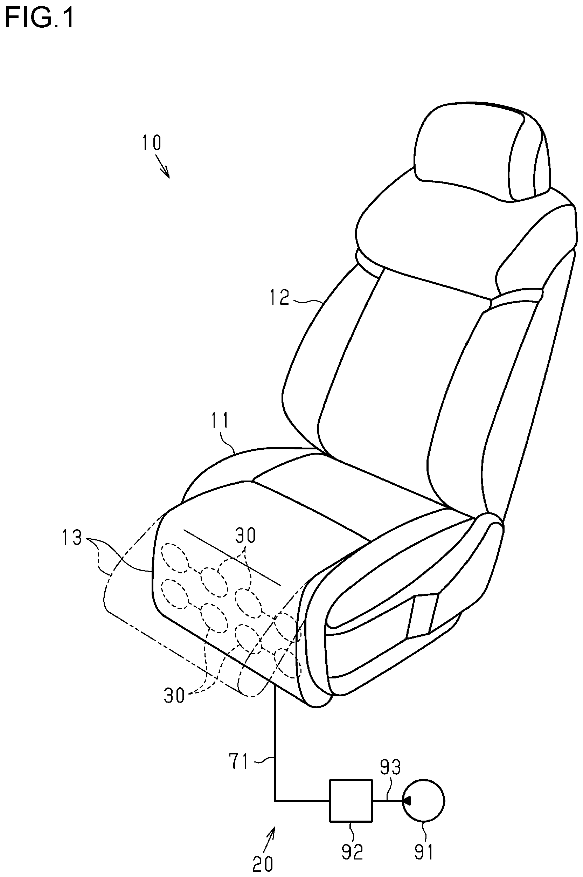

As illustrated in Fig. 1, a seat 10 is, for example, a vehicle seat adopted for a driver seat, a passenger seat, a rear seat, or the like of a vehicle. In another embodiment, the seat 10 may be a massage seat used in a facility or the like.

The seat 10 includes a seat cushion 11, a seat back 12, an ottoman 13, and a pneumatic system 20. The seat cushion 11 supports the buttocks, thighs, and the like of a user seated on the seat 10. The seat back 12 supports the waist, back, and the like of the user seated on the seat 10. The ottoman 13 supports the lower thigh and the like of the user seated on the seat 10.

The ottoman 13 has a rectangular parallelepiped shape. The width direction of the ottoman 13 is the width direction of the seat 10. The width direction of the ottoman 13 is orthogonal to the thickness direction of the ottoman 13.

In the following description, the direction orthogonal to both the width direction and the thickness direction of the ottoman 13 is referred to as the height direction of the ottoman 13. The width direction, the thickness direction, and the height direction of the ottoman 13 are simply referred to as a width direction, a thickness direction, and a height direction.

The upper end portion of the ottoman 13 is supported to be rotatable about an axis extending in the width direction of the seat 10 with respect to the front end portion of the seat cushion 11. The ottoman 13 thus rotates between a retracted position indicated by a solid line in Fig. 1 and a deployed position indicated by a two-dot chain line in Fig. 1. In a case where the ottoman 13 rotates from the retracted position to the deployed position, the lower end portion of the ottoman 13 moves forward and upward while drawing an arc.

### <Pneumatic System 20>

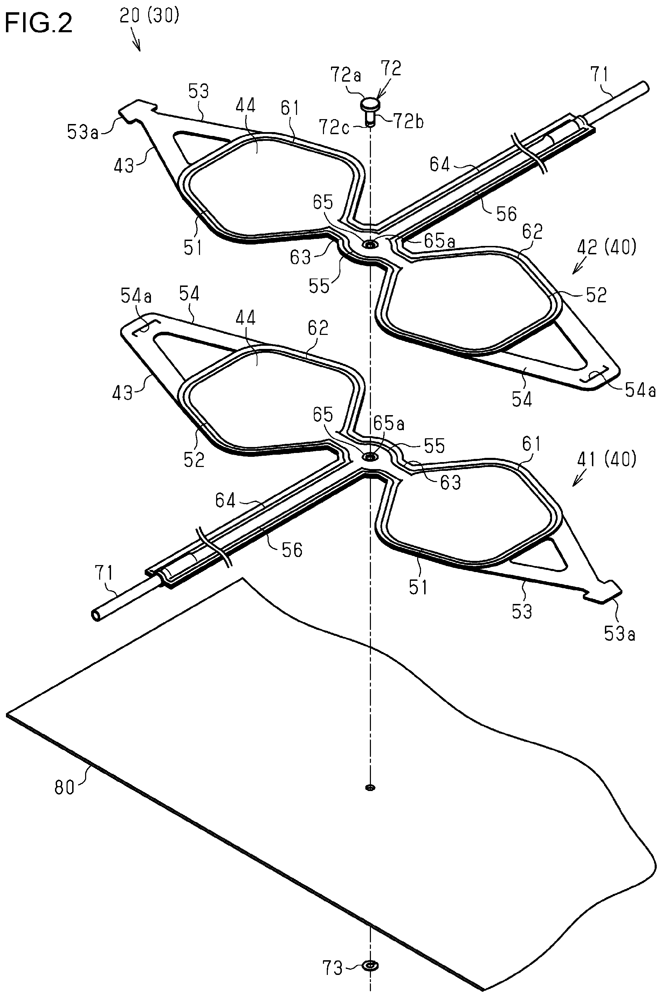

As illustrated in Figs. 1 and 2, the pneumatic system 20 includes a plurality of air bags 30, a support pad 80, a pump 91, a valve device 92, and a pipe 93. Fig. 2 is an exploded perspective view when focusing on one air bag 30. In the present embodiment, the total number of the air bags 30 is "4". The four air bags 30 are arranged in the width direction and the height direction. Specifically, two air bags 30 are arranged in the width direction, and two air bags 30 are arranged in the height direction. The plurality of air bags 30 are mounted on the ottoman 13 by being incorporated in the ottoman 13 of the seat 10.

### <Air Bag 30>

As illustrated in Fig. 2, the air bag 30 includes two bag portions 40 (41, 42), two connecting tubes 71, a fixture 72, and a snap ring 73. In the present embodiment, the two bag portions 40 have the same configuration. Hereinafter, a description will be given using a direction when the air bag 30 is mounted on the ottoman 13.

### <Bag Portion 40>

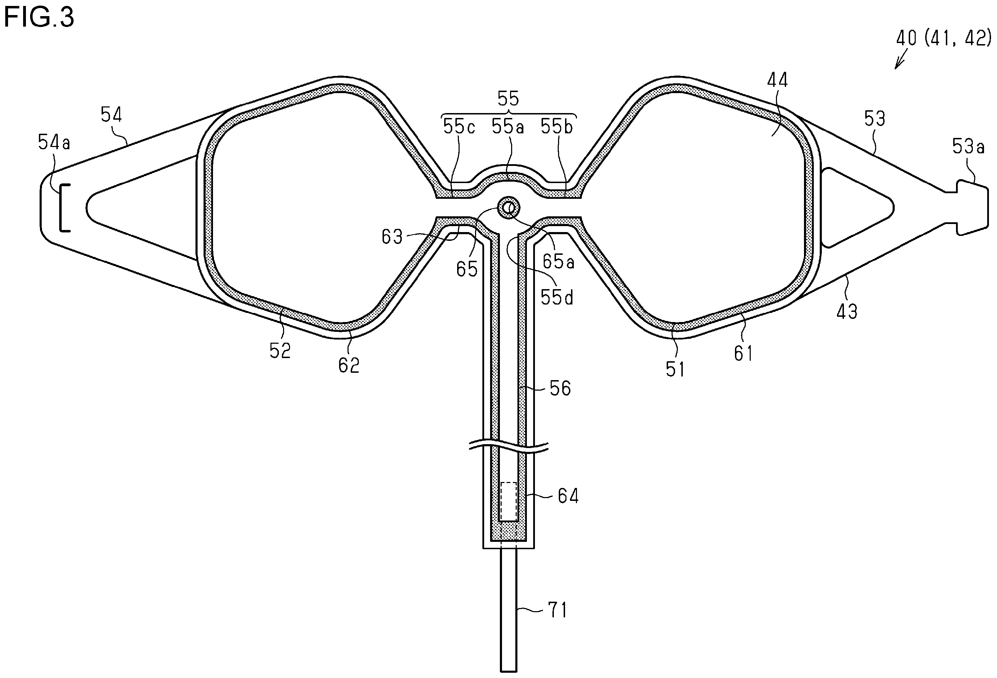

As illustrated in Figs. 2 to 4, the bag portion 40 (41, 42) is formed by joining two stacked sheet materials 43 and 44. The material of the two sheet materials 43 and 44 is, for example, a thermoplastic resin. In the present embodiment, the shapes of the two sheet materials 43 and 44 are different, but in another embodiment, the shapes of the two sheet materials 43 and 44 may be the same. The stacking direction of the two sheet materials 43 and 44 matches the thickness direction of the two sheet materials 43 and 44. In the following description, the stacking direction of the two sheet materials 43 and 44 is simply referred to as a stacking direction.

The bag portion 40 includes two air chambers 51 and 52, two extending portions 53 and 54, a branch flow path 55, a connecting flow path 56, two first joint portions 61 and 62, a second joint portion 63, a third joint portion 64, and a central joint portion 65. Such a configuration of the bag portion 40 is configured by joining two sheet materials 43 and 44.

The two air chambers 51 and 52 have a polygonal shape when viewed from the stacking direction. The two air chambers 51 and 52 may have a circular shape when viewed from the stacking direction. The two air chambers 51 and 52 expand by supplying air and contract by exhausting air. The two air chambers 51 and 52 are arranged at intervals in the width direction. The two air chambers 51 and 52 have a line-symmetric positional relationship with respect to a straight line extending in the height direction. In this respect, the direction in which the two air chambers 51 and 52 are arranged matches the width direction. The two air chambers 51 and 52 are connected by the branch flow path 55.

The first joint portion 61 joins the two sheet materials 43 and 44 so as to define the air chamber 51. Similarly, the first joint portion 62 joins the two sheet materials 43 and 44 so as to define the air chamber 52. In this respect, the two first joint portions 61 and 62 have a polygonal shape similarly to the two air chambers 51 and 52. The two sheet materials 43 and 44 are not joined at a portion where the two air chambers 51 and 52 and the branch flow path 55 are connected. That is, the first joint portion 61 is disconnected at a portion where the air chamber 51 and the branch flow path 55 are connected, and the first joint portion 62 is disconnected at a portion where the air chamber 52 and the branch flow path 55 are connected.

The two extending portions 53 and 54 extend from the two air chambers 51 and 52, respectively. The extending direction of the two extending portions 53 and 54 matches the width direction. That is, the extending direction of the two extending portions 53 and 54 intersects with the thickness direction of the two sheet materials 43 and 44. The extending portion 53 extends from the first joint portion 61 that defines the air chamber 51, and the extending portion 54 extends from the first joint portion 62 that defines the air chamber 52. The extending direction of the extending portion 53 is opposite to the extending direction of the extending portion 54.

The extending portion 53 has a locking piece 53a. The locking piece 53a forms a distal end portion in the extending direction of the extending portion 53. The width of the locking piece 53a gradually increases from the distal end toward the proximal end of the extending portion 53, and then rapidly decreases. The extending portion 54 has a locking hole 54a. The locking hole 54a has a slit shape. The direction in which the locking hole 54a extends is the height direction.

In the present embodiment, the two extending portions 53 and 54 are formed of one sheet material 43 of the two sheet materials 44 and 43. In another embodiment, the two extending portions 53 and 54 may be formed of the two sheet materials 43 and 44. In this case, the portions forming the two extending portions 53 and 54 of the two sheet materials 43 and 44 may be joined.

The branch flow path 55 connects the two air chambers 51 and 52. The branch flow path 55 extends linearly. The longitudinal direction of the branch flow path 55 is the width direction. In the longitudinal direction of the branch flow path 55, the flow path cross-sectional area of an intermediate portion 55a is larger than the flow path cross-sectional areas of both end portions 55b and 55c. Specifically, in the direction orthogonal to the longitudinal direction of the branch flow path 55, the width of the intermediate portion 55a is longer than the widths of the both end portions 55b and 55c. In the present embodiment, the width of the intermediate portion 55a of the branch flow path 55 gradually changes with respect to the longitudinal direction of the branch flow path 55. For this reason, the intermediate portion 55a of the branch flow path 55 has a circular shape or an elliptical shape when viewed from the stacking direction. The intermediate portion 55a is a part in the longitudinal direction of the branch flow path 55. The second joint portion 63 joins the two sheet materials 43 and 44 so as to define the branch flow path 55.

The connecting flow path 56 is connected to the intermediate portion 55a of the branch flow path 55. In this respect, the intermediate portion 55a of the branch flow path 55 corresponds to "flow path portion". In the following description, a portion of the intermediate portion 55a of the branch flow path 55 to which the connecting flow path 56 is connected is referred to as a boundary portion 55d. The connecting flow path 56 extends linearly. The longitudinal direction of the connecting flow path 56 is the height direction. In the longitudinal direction of the connecting flow path 56, the connecting tube 71 with appropriate elasticity is connected to an end portion opposite to the end portion connected to the branch flow path 55. The third joint portion 64 joins the two sheet materials 43 and 44 so as to define the connecting flow path 56. The third joint portion 64 is joined to the connecting tube 71. The connecting flow path 56 and the connecting tube 71 are joined so as not to leak air.

The central joint portion 65 joins portions forming the central portion of the intermediate portion 55a of the branch flow path 55 in the two sheet materials 43 and 44. The central joint portion 65 has a circular shape when viewed from the stacking direction. The central joint portion 65 preferably has a size that does not hinder the flow of air in the connecting flow path 56. The central joint portion 65 is located at the central portion in the width direction of the intermediate portion 55a. In this respect, when viewed from the stacking direction, the central joint portion 65 is located on a straight line extending in the longitudinal direction of the connecting flow path 56 at the center of the connecting flow path 56. The central joint portion 65 has a through-hole 65a penetrating the central joint portion 65 in the stacking direction. The through-hole 65a is a circular hole. The penetrating direction of the through-hole 65a is the stacking direction. The outer diameter of the through-hole 65a is smaller than the outer diameter of the central joint portion 65. The through-hole 65a is not connected to the connecting flow path 56.

In other words, the joining allowance that is the difference between the outer diameter of the through-hole 65a and the outer diameter of the central joint portion 65 is set to a length that prevents air from leaking from the branch flow path 55 to the through-hole 65a. In this respect, the central joint portion 65 corresponds to "partition portion" that partitions the through-hole 65a from the intermediate portion 55a of the branch flow path 55. It can be also said that the through-hole 65a is provided in the intermediate portion 55a of the branch flow path 55.

In the present embodiment, the first joint portions 61 and 62, the second joint portion 63, the third joint portion 64, and the central joint portion 65 are formed by high-frequency welding the two sheet materials 43 and 44. In another embodiment, the first joint portions 61 and 62, the second joint portion 63, the third joint portion 64, and the central joint portion 65 may be formed by thermally welding or laser welding the two sheet materials 43 and 44. The first joint portions 61 and 62, the second joint portion 63, the third joint portion 64, and the central joint portion 65 may be formed by bonding the two sheet materials 43 and 44 with an adhesive or the like.

### <Fixture 72 and Snap Ring 73>

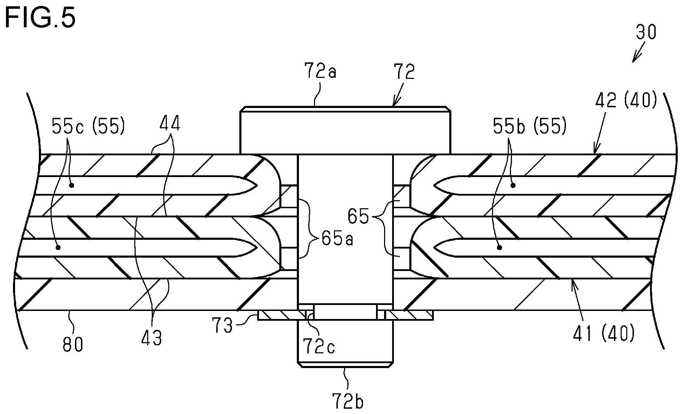

As illustrated in Figs. 2 and 5, the fixture 72 includes a head portion 72a and a shaft portion 72b.

The head portion 72a has a disk shape. The shaft portion 72b has a columnar shape. The shaft portion 72b extends from the head portion 72a. The outer diameter of the shaft portion 72b is smaller than the outer diameter of the head portion 72a. The shaft portion 72b has an annular groove 72c having an annular shape. The annular groove 72c is provided at a position closer to the distal end than the proximal end of the shaft portion 72b. The outer diameter of the snap ring 73 is larger than the outer diameter of the shaft portion 72b of the fixture 72. The shape of the snap ring 73 corresponds to the annular groove 72c of the shaft portion 72b.

### <Support Pad 80>

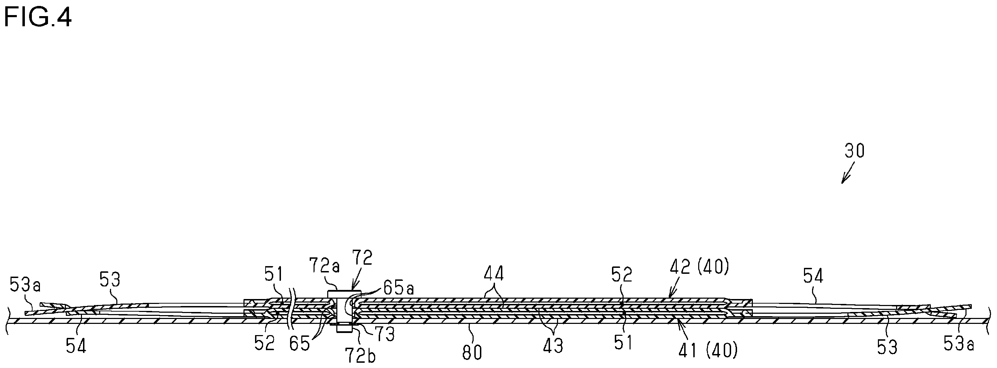

As illustrated in Figs. 2 and 4, the support pad 80 has a rectangular plate shape. The support pad 80 is thinner than the cushion pad of the ottoman 13. The support pad 80 is made of a material with cushioning property, such as urethane.

The two bag portions 40 and the support pad 80 are stacked in the stacking direction. At this time, the bag portion 41 is stacked on the support pad 80, and the bag portion 42 is stacked on bag portion 41. In the following description, the bag portion 41 stacked on the support pad 80 is referred to as "first bag portion 41", and the bag portion 42 stacked on the first bag portion 41 is referred to as "second bag portion 42".

The air chamber 51 of the first bag portion 41 overlaps the air chamber 52 of the second bag portion 42. The air chamber 52 of the first bag portion 41 overlaps the air chamber 51 of the second bag portion 42. The branch flow path 55 of the first bag portion 41 overlaps the branch flow path 55 of the second bag portion 42. As a result, the through-hole 65a of the first bag portion 41 overlaps the through-hole 65a of the second bag portion 42. On the other hand, the connecting flow path 56 of the first bag portion 41 does not overlap the connecting flow path 56 of the second bag portion 42. Specifically, the direction in which the connecting flow path 56 extends from the branch flow path 55 in the first bag portion 41 is opposite to the direction in which the connecting flow path 56 extends from the branch flow path 55 in the second bag portion 42.

The extending portion 53 of the first bag portion 41 overlaps the extending portion 54 of the second bag portion 42. The locking piece 53a of the extending portion 53 of the first bag portion 41 is locked to the locking hole 54a of the extending portion 54 of the second bag portion 42 in a state of being inserted into the locking hole 54a. That is, the distal end portion of the extending portion 53 of the first bag portion 41 is coupled to the distal end portion of the extending portion 54 of the second bag portion 42. Similarly, the extending portion 54 of the first bag portion 41 overlaps the extending portion 53 of the second bag portion 42. The locking piece 53a of the extending portion 53 of the second bag portion 42 is locked to the locking hole 54a of the extending portion 54 of the first bag portion 41 in a state of being inserted into the locking hole 54a. That is, the distal end portion of the extending portion 54 of the first bag portion 41 is coupled to the distal end portion of the extending portion 53 of the second bag portion 42.

The shaft portion 72b of the fixture 72 is inserted into the through-hole 65a of the central joint portion 65 of the first bag portion 41 and the through-hole 65a of the central joint portion 65 of the second bag portion 42. At this time, the head portion 72a of the fixture 72 is in contact with the sheet material 44 forming the branch flow path 55 of the second bag portion 42.

The shaft portion 72b of the fixture 72 penetrates the support pad 80. The snap ring 73 is fitted into the annular groove 72c of the shaft portion 72b of the fixture 72. At this time, the snap ring 73 is in contact with the support pad 80. In this manner, the two bag portions 40 are fixed to the support pad 80 by the fixture 72 and the snap ring 73.

The fixture 72 and the snap ring 73 sandwich parts of the intermediate portions 55a of the branch flow paths 55 of the two bag portions 40 in the stacking direction. That is, the fixture 72 and the snap ring 73 sandwich, in the stacking direction, portions of the intermediate portions 55a of the branch flow paths 55 of the two bag portions 40 except for the boundary portions 55d.

The head portion 72a of the fixture 72 is located on the first end side in the axial direction of the shaft portion 72b of the fixture 72, and the snap ring 73 is located on the second end side in the axial direction of the shaft portion 72b of the fixture 72. In this respect, the fixture 72 and the snap ring 73 correspond to "sandwiching portion", the head portion 72a of the fixture 72 corresponds to "first holding portion", and the snap ring 73 corresponds to "second holding portion".

As illustrated in Fig. 5, when viewed from the stacking direction, the outer shape of the head portion 72a of the fixture 72 is larger than the outer shape of the central joint portion 65 of the bag portion 40. In other words, the outer diameter of the head portion 72a of the fixture 72 is larger than the outer diameter of the central joint portion 65 of the bag portion 40. Similarly, when viewed from the stacking direction, the outer shape of the snap ring 73 is larger than the outer shape of the central joint portion 65 of the bag portion 40. In other words, the outer diameter of the snap ring 73 is larger than the outer diameter of the central joint portion 65 of the bag portion 40. Therefore, it can be said that the head portion 72a of the fixture 72 and the snap ring 73 are in contact with a portion forming the periphery of the central joint portion 65 in the sheet material 44 of the second bag portion 42.

In the present embodiment, the sheet materials 43 and 44 forming the first bag portion 41 correspond to "first sheet material", and the sheet materials 43 and 44 forming the second bag portion 42 correspond to "second sheet material". The air chambers 51 and 52, the extending portions 53 and 54, the branch flow path 55, and the connecting flow path 56 of the first bag portion 41 correspond to "first air chamber", "first extending portion", "first branch flow path", and "first branch flow path", respectively. Similarly, the air chambers 51 and 52, the extending portions 53 and 54, the branch flow path 55, and the connecting flow path 56 of the second bag portion 42 correspond to "second air chamber", "second extending portion", "second branch flow path", and "second branch flow path", respectively.

### <Other Configurations of Pneumatic System 20>

As illustrated in Fig. 1, the pump 91 may be an electric pump using an electric motor as a drive source. The pump 91 is provided at the upstream end of the pipe 93. When driven, the pump 91 pumps air toward the downstream of the pipe 93. The valve device 92 includes, for example, a plurality of solenoid valves. The valve device 92 is provided at the downstream end of the pipe 93. Although the illustration is simplified in Fig. 1, a plurality of connecting tubes 71 of a plurality of air bags 30 are connected to the valve device 92. The valve device 92 individually or integrally switches between an air supply state where air is supplied to the plurality of air bags 30 and an air exhaust state where air is exhausted from the plurality of air bags 30. The pipe 93 may be a rigid pipe or a tube with elasticity.

### <Operation of Present Embodiment>

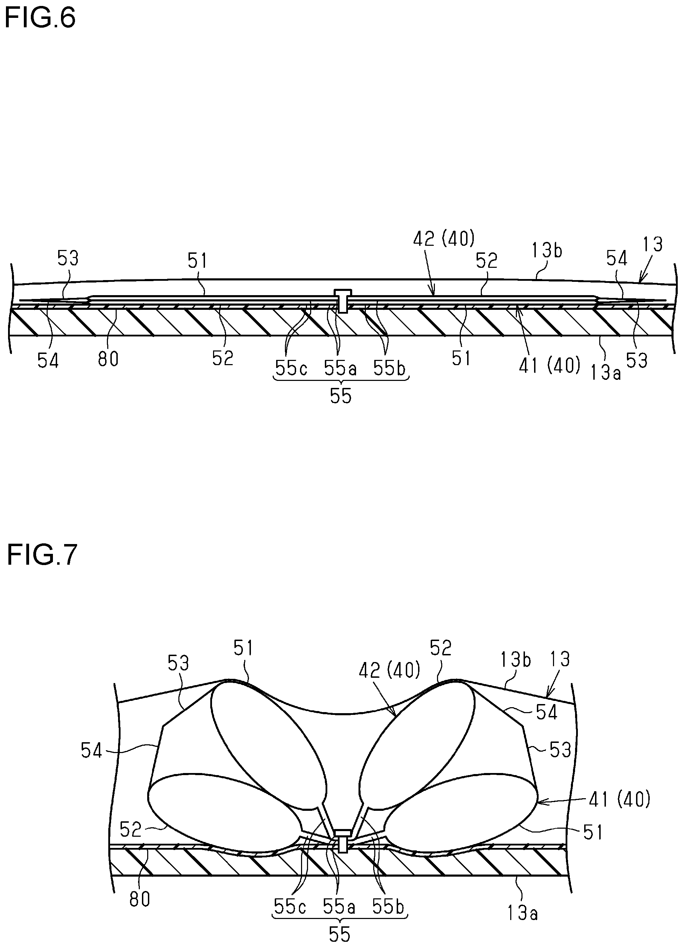

The operation of the pneumatic system 20 will be described with reference to Figs. 1 and 5 to 7. Figs. 6 and 7 illustrate a cushion pad 13a of the ottoman 13 and a skin 13b of the ottoman 13.

As indicated by the two-dot chain line in Fig. 1, the ottoman 13 is disposed at the deployed position when the pneumatic system 20 massages the legs of the user. The legs of the user seated on the seat 10 thus come into contact with the skin 13b of the ottoman 13 by their own weight. Thereafter, the mode of air supply to the plurality of air bags 30 is changed by driving the pump 91 and the valve device 92. Specifically, in a state where the pump 91 is driven, the state of the valve device 92 is switched, so that the state is switched between the air supply state where air is supplied to the plurality of air bags 30 and the air exhaust state where air is exhausted from the plurality of air bags 30. Hereinafter, a description will be given focusing on one air bag 30 for easy understanding of the description.

In the air supply state, air supplied from the pipe 93 to the first bag portion 41 sequentially flows through the connecting tube 71, the connecting flow path 56, and the branch flow path 55. The air reaching the intermediate portion 55a of the branch flow path 55 from the connecting flow path 56 branches toward the two air chambers 51 and 52. Here, as illustrated in Fig. 5, the intermediate portion 55a of the branch flow path 55 is sandwiched between the fixture 72 and the snap ring 73 in the stacking direction. Therefore, the intermediate portion 55a of the branch flow path 55 is restricted from largely expanding in the stacking direction. In this respect, at the beginning when air starts flowing from the connecting flow path 56 to the branch flow path 55, air easily flows through the branch flow path 55 toward the two air chambers 51 and 52. In this manner, the two air chambers 51 and 52 expand, and the pressures of the two air chambers 51 and 52 increase. On the other hand, in the air exhaust state, when the connecting tube 71 connected to the two air chambers 51 and 52 is opened to the outside air, air is exhausted from the two air chambers 51 and 52 via the branch flow path 55, the connecting flow path 56, and the connecting tube 71. In this manner, the two air chambers 51 and 52 contract, and the pressures of the two air chambers 51 and 52 decrease. The same applies to the expansion mode and the contraction mode of the second bag portion 42 stacked on the first bag portion 41.

As illustrated in Figs. 6 and 7, in the two bag portions 40, the intermediate portion 55a of the branch flow path 55 connecting the two air chambers 51 and 52 is fixed to the support pad 80. Therefore, in a case where the two bag portions 40 expand and contract, portions of the two air chambers 51 and 52 close to the branch flow path 55 in the width direction are less likely to be displaced with respect to the stacking direction. On the other hand, in a case where the two bag portions 40 expand and contract, portions of the two air chambers 51 and 52 far from the branch flow path 55 in the width direction are easily displaced with respect to the stacking direction. As a result, in a case where the air exhaust state is switched to the air supply state, the two bag portions 40 are displaced so as to sandwich the legs of the user in the width direction. On the other hand, in the air exhaust state, the two bag portions 40 are displaced so as to be separated from the legs of the user in the width direction. By repeating the air supply state and the air exhaust state in this manner, the air bag 30 massages the legs of the user via the skin 13b of the ottoman 13.

The two bag portions 40 are coupled on both sides in the width direction. Specifically, the extending portion 53 of the first bag portion 41 is coupled to the extending portion 54 of the second bag portion 42, and the extending portion 54 of the first bag portion 41 is coupled to the extending portion 53 of the second bag portion 42. Therefore, even in a case where the two bag portions 40 repeatedly expand and contract, one of the two bag portions 40 is less likely to be shifted with respect to the other.

### <Effects of Present Embodiment>

(1) In the air bag 30, the two air chambers 51 and 52 of the first bag portion 41 and the two air chambers 51 and 52 of the second bag portion 42 are stacked. Therefore, in a case where air is supplied to the first bag portion 41 and the second bag portion 42, the air bag 30 largely expands in the stacking direction. The air bag 30 can thus increase the pressing force that is the force to press the legs of the user. The two air chambers 51 and 52 of the first bag portion 41 and the two air chambers 51 and 52 of the second bag portion 42 are coupled via the two extending portions 53 and 54 of the first bag portion 41 and the two extending portions 53 and 54 of the second bag portion 42. In this respect, when the first bag portion 41 and the second bag portion 42 expand or contract, the two air chambers 51 and 52 of the first bag portion 41 are less likely to be shifted with respect to the two air chambers 51 and 52 of the second bag portion 42. The air bag 30 can thus suppress a decrease in pressing force due to the positional shifts of the two air chambers 51 and 52 of the first bag portion 41 and the two air chambers 51 and 52 of the second bag portion 42.
(2) The first bag portion 41 and the second bag portion 42 have two air chambers 51 and 52 arranged in the width direction. The air bag 30 can thus press the legs of the user over a wide range.
(3) The first bag portion 41 has two extending portions 53 and 54 extending outward in the width direction from the two air chambers 51 and 52, respectively. Similarly, the second bag portion 42 has two extending portions 53 and 54 extending outward in the width direction from the two air chambers 51 and 52, respectively. The two extending portions 53 and 54 of the first bag portion 41 and the two extending portions 53 and 54 of the second bag portion 42 are coupled to each other. The air bag 30 can thus suppress efficiently the positional shifts of the two air chambers 51 and 52 of the first bag portion 41 and the two air chambers 51 and 52 of the second bag portion 42 with a small number of the extending portions 53 and 54.
(4) In the air bag 30, the two extending portions 53 and 54 of the first bag portion 41 are formed of the sheet material 43. Similarly, the two extending portions 53 and 54 of the second bag portion 42 are formed of the sheet material 43. In this respect, the air bag 30 does not require a new member in order to provide the two extending portions 53 and 54 of the first bag portion 41 and the two extending portions 53 and 54 of the second bag portion 42.
(5) In the two bag portions 40, the connecting flow path 56 supplies air to the two air chambers 51 and 52 and exhausts air from the two air chambers 51 and 52. The connecting flow path 56 is connected to the branch flow path 55 fixed to the support pad 80. In other words, the connecting flow path 56 is connected to the branch flow path 55 whose displacement is restricted. Therefore, even in a case where the two air chambers 51 and 52 repeatedly expand and contract, the connecting flow path 56 is less likely to be displaced depending on the expansion and contraction operations of the two air chambers 51 and 52. The air bag 30 can thus suppress the movement of the connecting flow path 56 inside the ottoman 13 when the first bag portion 41 and the second bag portion 42 expand or contract.
(6) In the air bag 30, the extending portion 53 of the first bag portion 41 and the extending portion 54 of the second bag portion 42 are coupled via the locking piece 53a and the locking hole 54a. Similarly, the extending portion 53 of the second bag portion 42 and the extending portion 54 of the first bag portion 41 are coupled via the locking piece 53a and the locking hole 54a. In the air bag 30, the two extending portions 53 and 54 of the first bag portion 41 and the two extending portions 53 and 54 of the second bag portion 42 can be coupled with a simple configuration.
(7) In the air bag 30, the first bag portion 41 and the second bag portion 42 have the same shape. The first bag portion 41 and the second bag portion 42 can thus be manufactured by the same manufacturing method. For example, the first bag portion 41 and the second bag portion 42 can be manufactured with the same mold.
(8) In the two bag portions 40, the connecting flow path 56 is connected to the intermediate portion 55a of the branch flow path 55. Therefore, in the two bag portions 40, in a case where air is supplied to the two air chambers 51 and 52 via the connecting flow path 56, air flowing into the branch flow path 55 from the connecting flow path 56 branches toward the two air chambers 51 and 52 at the intermediate portion 55a of the branch flow path 55. The air bag 30 includes the fixture 72 and the snap ring 73 that sandwich the intermediate portions 55a of the branch flow paths 55 of the two bag portions 40 in the stacking direction. As a result, when air flows into the branch flow path 55, the branch flow path 55 is less likely to expand. In this respect, air flowing from the connecting flow path 56 into the branch flow path 55 easily flows toward the two air chambers 51 and 52. As a result, in the air bag 30, the two air chambers 51 and 52 of the two bag portions 40 can be expanded quickly at the time of air supply.
(9) The fixture 72 has the shaft portion 72b inserted into the through-holes 65a of the central joint portions 65 of the two bag portions 40. That is, the fixture 72 and the snap ring 73 can sandwich the intermediate portion 55a of the branch flow path 55 in the stacking direction so as to penetrate the central joint portion 65. Therefore, in the air bag 30, the shift of the position where the intermediate portions 55a of the branch flow paths 55 of the two bag portions 40 are sandwiched between the fixture 72 and the snap ring 73 can be suppressed.
(10) In the air bag 30, the head portion 72a of the fixture 72 and the snap ring 73 can sandwich a portion forming the periphery of the central joint portion 65 in the sheet material 43 forming the branch flow path 55 in the stacking direction. As a result, when air flows into the branch flow path 55, the branch flow path 55 is further less likely to expand. As a result, in the air bag 30, the two air chambers 51 and 52 can be expanded more quickly at the time of air supply.
(11) In the air bag 30, the fixture 72 and the snap ring 73 sandwich the central portion in the width direction of the intermediate portion 55a of the branch flow path 55. Therefore, in the air bag 30, as compared with a comparative example in which the fixture 72 and the snap ring 73 sandwich a position shifted from the central portion in the width direction of the intermediate portion 55a of the branch flow path 55, air flowing into the branch flow path 55 from the connecting flow path 56 easily flows toward the two air chambers 51 and 52.

### <Modifications>

The present embodiment can be modified and implemented as follows. The present embodiment and the following modifications can be implemented in combination with each other within a technically consistent range.

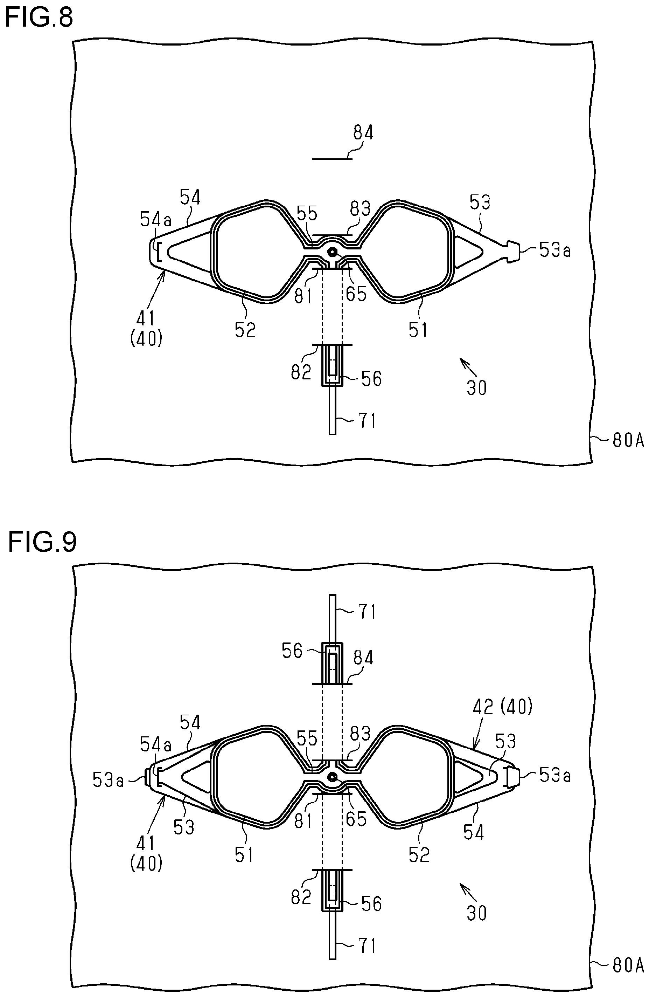

The mode of fixing the air bag 30 to the support pad 80 can be changed as appropriate. Figs. 8 and 9 illustrate an air bag 30 and a support pad 80A according to a modification.

As illustrated in Fig. 8, the support pad 80A has four slits 81 to 84. The longitudinal direction of the four slits 81 to 84 matches the width direction. The four slits 81 to 84 are arranged in parallel at intervals in the height direction.

As illustrated in Fig. 8, the first bag portion 41 is stacked on the support pad 80A. At this time, the portion forming the connecting flow path 56 of the first bag portion 41 and the connecting tube 71 are inserted into the slit 81 and the slit 82 of the support pad 80A. Therefore, a portion close to the branch flow path 55 in the portion forming the connecting flow path 56 of the first bag portion 41 is located on the back side of the support pad 80A. On the other hand, a portion far from the branch flow path 55 in the portion forming the connecting flow path 56 of the first bag portion 41 is located on the front side of the support pad 80A. The first bag portion 41 is thus supported by the support pad 80A.

As illustrated in Fig. 9, the second bag portion 42 is stacked on the first bag portion 41. Specifically, in the two bag portions 40, the second bag portion 42 is stacked on the first bag portion 41 in a manner that the extending directions of the connecting flow paths 56 are opposite to each other. At this time, the portion forming the connecting flow path 56 of the second bag portion 42 and the connecting tube 71 are inserted into the slit 83 and the slit 84 of the support pad 80A. Therefore, a portion close to the branch flow path 55 in the portion forming the connecting flow path 56 of the second bag portion 42 is located on the back side of the support pad 80A. On the other hand, a portion far from the branch flow path 55 in the portion forming the connecting flow path 56 of the second bag portion 42, is located on the front side of the support pad 80A. The second bag portion 42 is thus supported by the support pad 80A.

The extending portion 53 of the first bag portion 41 and the extending portion 54 of the second bag portion 42 are coupled via the locking piece 53a and the locking hole 54a. Similarly, the extending portion 53 of the second bag portion 42 and the extending portion 54 of the first bag portion 41 are coupled via the locking piece 53a and the locking hole 54a.

As described above, the movement of the first bag portion 41 and the second bag portion 42 supported by the support pad 80A in the width direction is restricted by the slits 81 to 84. Since the first bag portion 41 and the second bag portion 42 are coupled, the movement of the first bag portion 41 and the second bag portion 42 supported by the support pad 80A in the height direction is restricted. The support pad 80A of the modification can thus support the two bag portions 40 with a simple configuration.

The mode of coupling the extending portion 53 of the first bag portion 41 and the extending portion 54 of the second bag portion 42 can be changed as appropriate. For example, the extending portion 53 of the first bag portion 41 and the extending portion 54 of the second bag portion 42 may be undetachably coupled by welding, adhesion, or the like. The extending portion 53 of the first bag portion 41 and the extending portion 54 of the second bag portion 42 may be coupled by another member such as a clip. The same applies to a mode of coupling the extending portion 54 of the first bag portion 41 and the extending portion 53 of the second bag portion 42.

In the first bag portion 41, the two extending portions 53 and 54 does not need to be formed of at least one of the two sheet materials 43 and 44. For example, the first bag portion 41 may be formed by joining the two extending portions 53 and 54 formed separately to the two sheet materials 43 and 44 forming the two air chambers 51 and 52. The same applies to the second bag portion 42.

In the first bag portion 41, the extending direction of the extending portions 53 and 54 can be changed as appropriate. In the first bag portion 41, the number of the extending portions 53 and 54 can be changed as appropriate. The same applies to the second bag portion 42.

The first bag portion 41 may be formed to include only one of the two air chambers 51 and 52. For example, in a case where the first bag portion 41 includes only the air chamber 51, the first bag portion 41 is only required to include only the extending portion 53 corresponding to the air chamber 51. The same applies to the second bag portion 42.

The first bag portion 41 does not need to have the central joint portion 65. In this case, the intermediate portion 55a of the branch flow path 55 of the first bag portion 41 is preferably sandwiched between the fixtures 72. Therefore, the fixture 72 in this case preferably has a configuration capable of sandwiching the first bag portion 41 and the support pad 80 in the stacking direction, such as a clamp or a clip. The same applies to the second bag portion 42.

In the first bag portion 41, the connecting flow path 56 may be connected to a position shifted from the center in the longitudinal direction of the branch flow path 55. In this case, the portion of the branch flow path 55 to which the connecting flow path 56 is connected corresponds to "flow path portion".

When viewed from the stacking direction, the head portion 72a of the fixture 72 may have the same size as the central joint portion 65 of the bag portion 40 or may be smaller than the central joint portion 65 of the bag portion 40.

It is only required that the fixture 72 and the snap ring 73 can sandwich the intermediate portions 55a of the branch flow paths 55 of the two bag portions 40 in the stacking direction. Therefore, the position of the snap ring 73 may be located between the first bag portion 41 and the support pad 80. In this case, the air bag 30 is preferably fixed to the support pad 80 via the distal end portion of the shaft portion 72b of the fixture 72.

The fixture 72 and the snap ring 73 corresponding to "sandwiching portion" can be replaced with other fastening members. For example, "sandwiching portion" may be a bolt and a nut, may be a rivet, or may have another configuration.

It is only required that the state where "sandwiching portion" sandwiches the intermediate portion 55a of the branch flow path 55 of the bag portion 40 in the stacking direction is a state where "sandwiching portion" restricts the expansion of the intermediate portion 55a of the branch flow path 55 even slightly at the time of supplying air to the air bag 30. That is, at the time of exhausting air from the air bag 30, a gap may be generated in the stacking direction between the "sandwiching portion" and the first bag portion 41 and the second bag portion 42.

The air bag 30 does not need to include the fixture 72. In this case, in a case where air is supplied to the first bag portion 41, the central joint portion 65 suppresses the expansion of the intermediate portion 55a of the branch flow path 55 in the thickness direction. That is, it can be said that the central joint portion 65 sandwiches the intermediate portion 55a of the branch flow path 55 in the thickness direction of the two sheet materials 43 and 44. Therefore, in a case where the air bag 30 does not include the fixture 72, it can be said that the central joint portion 65 corresponds to "sandwiching portion". In this modification, the first bag portion 41 may be supported by the support pad 80 via the central joint portion 65, or may be supported by the support pad 80 via another portion.

The air bag 30 may be incorporated in the seat cushion 11, may be incorporated in the seat back 12, or may be incorporated in a portion of the seat 10 that supports the user's arm. That is, the air bag 30 can be used for massaging the body parts other than the legs of the user, such as the back, neck, buttocks, and arms of the user. In this case, the air bag 30 may be incorporated in the seat 10 so as to be able to sandwich the body of the user as in the above embodiment, or may be incorporated in the seat 10 so as to be able to press the body of the user in a certain direction unlike the above embodiment.

The air chambers 51 and 52 of the first bag portion 41 are not formed in a bag shape by joining the two sheet materials 43 and 44, but may be formed in a bag shape with a single material. The same applies to the second bag portion 42.

### <Summary of Present Embodiments>

An air bag includes a bag portion including two air chambers that expand by supply of air and contract by exhaust of air, a branch flow path that connects the two air chambers, and a connecting flow path that is connected to the branch flow path, when a part in a longitudinal direction of the branch flow path is defined as a flow path portion, the connecting flow path is connected to the flow path portion, and the air bag further includes a sandwiching portion that sandwiches a portion of the flow path portion of the branch flow path except for a boundary portion to which the connecting flow path is connected.

In the air bag, the connecting flow path is connected to the flow path portion of the branch flow path. Therefore, in a case where air is supplied to the two air chambers via the connecting flow path, air flowing into the branch flow path from the connecting flow path branches toward the two air chambers at the flow path portion of the branch flow path. Here, the air bag with the above configuration includes the sandwiching portion that sandwiches the flow path portion of the branch flow path. As a result, when air flows into the branch flow path, the branch flow path is less likely to expand. In this respect, air flowing from the connecting flow path into the branch flow path easily flows toward the two air chambers. As a result, in the air bag, two air chambers can be expanded quickly at the time of air supply.

In the air bag, preferably, a through-hole penetrating the flow path portion is provided in the flow path portion of the branch flow path, the bag portion includes a partition portion that partitions the through-hole from the flow path portion, and the sandwiching portion includes a shaft portion inserted into the through-hole.

In the air bag, the sandwiching portion has the shaft portion to be inserted into the through-hole partitioned by the partition portion.

That is, the sandwiching portion can sandwich the flow path portion of the branch flow path in the stacking direction so as to penetrate the through-hole. Therefore, in the air bag, the shift of the position where the flow path portion of the branch flow path is sandwiched by the sandwiching portion can be suppressed.

In the air bag, the sandwiching portion includes a first holding portion located on one end side in an axial direction of the shaft portion and a second holding portion located on the other end side in the axial direction of the shaft portion, and an outer shape of at least one of the first holding portion or the second holding portion of the sandwiching portion is larger than an outer shape of the partition portion of the branch flow path when viewed from a penetrating direction of the through-hole.

In the air bag, at least one holding portion of the sandwiching portion can sandwich a portion forming the periphery of the partition portion in the sheet material forming the branch flow path. As a result, when air flows into the branch flow path, the branch flow path is further less likely to expand. As a result, in the air bag, two air chambers can be expanded more quickly at the time of air supply.

In the air bag, the sandwiching portion preferably sandwiches a center portion in the longitudinal direction of the flow path portion of the branch flow path.

In the air bag, as compared with a comparative example in which the sandwiching portion sandwiches a position shifted from the central portion in the longitudinal direction of the flow path portion of the branch flow path, air flowing into the branch flow path from the connecting flow path easily flows toward the two air chambers.

An air bag includes a bag portion formed by joining two sheet materials, the bag portion including two air chambers that expand by supply of air and contract by exhaust of air, a branch flow path that connects the two air chambers, and a connecting flow path that is connected to the branch flow path, the connecting flow path is connected to an intermediate portion in a longitudinal direction of the branch flow path, and the air bag further includes a sandwiching portion that sandwiches the intermediate portion of the branch flow path in a stacking direction of the two sheet materials.

In the air bag, it is preferable that the bag portion have a central joint portion that joins portions forming a center of the flow path portion of the branch flow path in the two sheet materials, the central joint portion include a through-hole penetrating the central joint portion in the stacking direction, and the sandwiching portion have a shaft portion inserted into the through-hole in the central joint portion of the branch flow path.

In the air bag, the sandwiching portion includes a first holding portion located on one end side in an axial direction of the shaft portion and a second holding portion located on the other end side in the axial direction of the shaft portion and sandwiching the flow path portion of the branch flow path in the stacking direction together with the first holding portion, and when the branch flow path is viewed from the stacking direction, an outer shape of at least one of the first holding portion or the second holding portion of the sandwiching portion is larger than an outer shape of the central joint portion of the branch flow path.

## Claims

1. An air bag (30) comprising a bag portion (40, 41, 42) including two air chambers (51, 52) that expand by supply of air and contract by exhaust of air, a branch flow path (55) that connects the two air chambers (51, 52), and a connecting flow path (56) that is connected to the branch flow path (55), wherein
when a part in a longitudinal direction of the branch flow path (55) is defined as a flow path portion (55a), the connecting flow path (56) is connected to the flow path portion (55a), and
the air bag (30) further comprising a sandwiching portion (72, 73) that sandwiches a portion of the flow path portion (55a) of the branch flow path (55) except for a boundary portion (55d) to which the connecting flow path (56) is connected.

2. The air bag (30) according to Claim 1, wherein a through-hole (65a) penetrating the flow path portion (55a) is provided in the flow path portion (55a) of the branch flow path (55),
the bag portion (40, 41, 42) includes a partition portion (65) that partitions the through-hole (65a) from the flow path portion (55a), and
the sandwiching portion (72, 73) includes a shaft portion (72b) inserted into the through-hole (65a).

3. The air bag (30) according to Claim 2, wherein the sandwiching portion (72, 73) includes a first holding portion (72a) located on a first end side in an axial direction of the shaft portion (72b) and a second holding portion (73) located on a second end side in the axial direction of the shaft portion (72b), and
an outer shape of at least one of the first holding portion (72a) or the second holding portion (73) of the sandwiching portion (72, 73) is larger than an outer shape of the partition portion (65) of the branch flow path (55) when viewed from a penetrating direction of the through-hole (65a).

4. The air bag (30) according to any one of Claims 1 to 3, wherein the sandwiching portion (72, 73) sandwiches a center portion in the longitudinal direction of the flow path portion (55a) of the branch flow path (55).
